(19) Europäisches Patentamt / European Patent Office / Office européen des brevets

(11) EP 2 942 634 B1

(12) EUROPÄISCHE PATENTSCHRIFT

(45) Veröffentlichungstag und Bekanntmachung des Hinweises auf die Patenterteilung:
12.10.2016 Patentblatt 2016/41

(51) Int Cl.:
*G01R 31/40* $^{(2006.01)}$    *H02S 50/15* $^{(2014.01)}$

(21) Anmeldenummer: 15165347.4

(22) Anmeldetag: 28.04.2015

(54) **VERFAHREN ZUR MESSUNG UND BEWERTUNG VON LEISTUNGSVERLUSTEN IN SOLARZELLE, SOLARMODUL UND SOLARANLAGEN DURCH FOTOGRAFISCHE LUMINESZENZ- UND THERMOGRAFIEMESSUNGEN**

METHODS OF MEASURING AND EVALUATING POWER LOSSES IN SOLAR CELL, SOLAR MODULE, AND SOLAR FACILITIES BY MEANS OF PHOTOGRAPHIC LUMINESCENCE AND THERMOGRAPHY MEASUREMENTS

PROCÉDÉ DE MESURE ET D'ÉVALUATION DE PERTES DE RENDEMENT DANS CES CELLULES SOLAIRES, MODULE SOLAIRE ET INSTALLATIONS SOLAIRES PAR MESURES THERMOGRAPHIQUES ET DE LUMINANCE PHOTOGRAPHIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.05.2014 DE 102014208462**

(43) Veröffentlichungstag der Anmeldung:
**11.11.2015 Patentblatt 2015/46**

(73) Patentinhaber: **Forschungszentrum Jülich GmbH 52425 Jülich (DE)**

(72) Erfinder:
• **Gerber, Andreas, Dr.**
**50827 Köln (DE)**
• **Rau, Uwe, Prof. Dr.**
**52428 Jülich (DE)**
• **Siegloch, Max, Dipl.-Ing.**
**51105 Köln (DE)**
• **Stoicescu, Liviu, Dipl.-Ing.**
**70191 Stuttgart (DE)**

(74) Vertreter: **Gille Hrabal**
**Brucknerstrasse 20**
**40593 Düsseldorf (DE)**

(56) Entgegenhaltungen:
**WO-A1-2013/085385      JP-A- 2011 138 981**
**US-A1- 2014 039 820**

## Beschreibung

Die vorliegende Erfindung betrifft ein Verfahren für eine Bewertung der Qualität von Solarzellen bzw. Solarmodulen.

Aus dem Stand der Technik ist bekannt, Lumineszenz- und Thermografiemessungen zur Kontrolle der Qualität von Solarzellen bzw. Solarmodulen durchzuführen. Bildgebende Lumineszenz- und Thermografieverfahren sind gängige Methoden zur Charakterisierung von Solarzellen und -modulen. Die quantitative Verarbeitung der Bilder im Sinne einer Leistungs- und Fehlerbewertung ist jedoch ein ungelöstes Problem. Bislang vorgeschlagene Verfahren sind entweder rein qualitativ oder widersprüchlich oder nicht eindeutig.

Das Dokument WO2013/085385A beschreibt ein Verfahren für eine Kontrolle einer Solarzelle.

20 Beim Thermografieverfahren wird an eine Solarzelle bzw. ein Solarmodul eine Spannung angelegt und/oder diese mit Licht bestrahlt, um einen Stromfluss zu erzeugen. Während der Anwendung der Spannung oder der Bestrahlung mit Licht wird eine Oberfläche der Solarzelle bzw. des Moduls mit einer Infrarotkamera fotografiert. Es resultiert ein Bild, welches zeigt, welche Bereiche der Oberfläche sich wie erwärmt haben. Erwärmte Bereiche signalisieren Dissipation von Leistung, also Leistungsverluste, da die Erzeugung von Wärme nicht angestrebt wird. Somit erlaubt ein Thermographiebild eine Aussage über die Qualität einer Solarzelle, deren Aussagekraft allerdings nicht sehr hoch ist. Ein bekanntes Verfahren ('Lock-In Thermographie') misst Differenzen der Leistungsdissipation während entweder die angelegte Spannung periodisch zwischen zwei Werten variiert wird oder die eingestrahlte Lichtleistung periodisch variiert wird.

Beim Lumineszenzverfahren wird ausgenutzt, dass ein Anlegen einer Spannung an eine Solarzelle und/oder Bestrahlen mit Licht eine Lichtemission zur Folge hat. Die Lichtemission wird g mit einer für Lumineszenz geeigneten Kamera aufgenommen. Aus dem Bild kann dann auf das Funktionieren von einzelnen Bereichen der Solarzelle geschlossen werden. Allerdings ist wiederum die Aussagekraft unbefriedigend, da unmittelbar nur eine qualitative Aussage über die Funktionsfähigkeit der Solarzelle möglich ist.

Mit der vorliegenden Anmeldung wird das Ziel verfolgt, die Qualitätskontrolle bei Solarzellen mittels Thermographie bzw. Lumineszenzabbildung zu verbessern.

Zur Lösung der Aufgabe umfasst ein Verfahren für eine Kontrolle der Qualität einer Solarzelle mittels Lumineszenz folgende Schritte:

- an eine Solarzelle wird eine erste Spannung $V_1$ kleiner oder gleich Null angelegt und das emittierte Licht der Solarzelle fotografiert, um so ein erstes Bild zu erhalten;
- an die Solarzelle wird eine zweite Spannung $V_2$, nachfolgend auch Spannung im Arbeitspunkt genannt, größer als Null angelegt und das emittierte Licht der Solarzelle fotografiert, um so ein zweites Bild zu erhalten;
- an die Solarzelle wird eine dritte Spannung $V_3$ größer als Null und kleiner als die zweite Spannung angelegt und das emittierte Licht der Solarzelle fotografiert, um so ein drittes Bild zu erhalten;
- an die Solarzelle wird eine vierte Spannung $V_4$ größer als die zweite Spannung angelegt und das emittierte Licht der Solarzelle fotografiert, um so ein viertes Bild zu erhalten;
- es wird eine erste Differenz D1 zwischen den Pixelwerten der Fotografien bei der ersten und zweiten Spannung gebildet, also die digitalen Werte des ersten Bildes von den digitalen Werten des zweiten Bildes abgezogen;
- es wird eine zweite Differenz D2 zwischen den Bildern zur dritten und vierten Spannung gebildet, also die digitalen Werte des vierten Bildes von den digitalen Werten des dritten Bildes abgezogen;
- es wird der Quotient zwischen der ersten und der zweiten Differenz gebildet.

Der so ermittelte Quotient ist ein Maß für die Qualität der Solarzelle. Jedem Pixel kann ein Wert zugeordnet werden, der aus der Bildung des Quotienten resultiert. Dieser Wert stellt ein Maß dafür dar, wie gut der entsprechende punktförmige Bereich auf der Oberfläche der Solarzelle zur Stromerzeugung beiträgt.

Wie eingangs beschrieben werden also verfahrensgemäß Lumineszenzaufnahmen gemacht, allerdings im Unterschied zum Stand der Technik bei unterschiedlichen Spannungen. Durch geeignete Differenz- und abschließende Bildung des Quotienten wird eine Qualitätskontrolle ermöglicht.

Die Empfindlichkeit der Kamera (Belichtungszeit und Blende) wird in einer Ausgestaltung der Erfindung für alle vier vorgenannten Bilder konstant gehalten, um zu besonders guten Ergebnissen zu gelangen.

Das beanspruchte Verfahren ermöglicht es, für jedes Pixel eines digitalen Kamerabildes eine Qualitätsinformation zu erhalten. Durch Normierung kann zum Beispiel in einer Ausführungsform jedem Pixel beispielsweise ein Wert zwischen 0 und 1 zugeordnet werden. 1 bedeutet, dass eine maximal mögliche Qualität erzielt wurde, dass also der beim entsprechenden punktförmigen Bereich erzeugte Photostrom zu 100% genutzt werden kann. 0 bedeutet, dass dieser punktförmige Bereich auf der Oberfläche der Solarzelle keinen Beitrag zur Stromerzeugung zu leisten vermag. Werte zwischen 0 und 1 bedeuten, dass ein dazwischen liegender entsprechend abgestufter Beitrag zur Stromerzeugung möglich ist, also eine Qualität erreicht wurde, die zwischen der maximal möglichen Qualität und der minimal möglichen Qualität liegt. Eine Normierung ist aber nicht zwingend notwendig, da die Normierung es lediglich erleichtert, die ermittelten Werte zu interpretieren.

In einer vereinfachten Ausführungsform der Erfindung wird das zur zweiten Spannung gehörende Bild als Mittelwert des dritten und des vierten Bilds ermittelt, so dass das zweite Bild nicht explizit aufgenommen werden muss.

In einer bevorzugten Ausführungsform der Erfindung ist die Differenz zwischen vierter und zweiter Spannung (vierte Spannung - zweite Spannung) kleiner als die zweite Spannung und zwar vorzugsweise um ein Mehrfaches kleiner. Ferner ist die Differenz zwischen zweiter und dritter Spannung (zweite Spannung - dritte Spannung) kleiner als die zweite Spannung und zwar vorzugsweise um ein Mehrfaches kleiner. Durch diese Ausführungsform wird mit Vorteil erreicht, dass die dritte und die vierte Spannung relativ nahe bei der zweiten Spannung liegen. Hierdurch kann verbessert ein geeignetes Maß zur Beurteilung der Qualität einer Solarzelle ermittelt werden.

In einer bevorzugten Ausführungsform der Erfindung beträgt die Differenz zwischen vierter und zweiter Spannung (vierte Spannung - zweite Spannung) bezogen auf eine einzelne Solarzelle weniger als 0,1 Volt, bevorzugt weniger als 0,01 Volt. Ferner beträgt die Differenz zwischen zweiter und dritter Spannung (zweite Spannung - dritte Spannung) weniger als 0,1 Volt, bevorzugt weniger als 0,01 Volt. Durch diese Ausführungsform wird mit Vorteil erreicht, dass die dritte und die vierte Spannung nahe bei der zweiten Spannung liegen. Hierdurch kann verbessert ein geeignetes Maß zur Beurteilung der Qualität einer Solarzelle ermittelt werden. In einem Solarmodul oder einem Modulsystem werden obige Spannungswerte als Spannung pro in Serie geschalteter Solarzelle verstanden.

Der Arbeitspunkt, also die zweite Spannung, kann frei gewählt werden. Die zweite Spannung ist jedoch vorzugsweise wesentlich größer als der jeweilige Abstand der dritten und vierten Spannung zur zweiten Spannung, um besonders gut die Qualität der Solarzelle beurteilen zu können.

Die dritte und vierte Aufnahme beziehen sich also auf Spannung nahe beim Arbeitspunkt. Beträgt die Spannung beim Arbeitspunkt also zum Beispiel 0.6 Volt, so betragen der Wert der dritten Spannung also zum Beispiel 0.59 Volt und der Wert der vierten Spannung 0,61 Volt. Die Spannungswerte der dritten und vierten Spannung werden also mit Vorteil um den Arbeitspunkt herum nur gering variiert, um im Ergebnis eine lokale Ableitung erhalten zu können, da die Lumineszenzfunktion sich nicht linear verhält, also die Lichtabhängigkeit in Abhängigkeit vom angelegten Strom. Um hier mit Vorteil in einen quasi linearen Bereich hineinzugelangen, werden vorzugsweise nur kleine Spannungsvariationen um den Arbeitspunkt herum vorgesehen.

In einer bevorzugten Ausführungsform der Erfindung befindet sich die Solarzelle während den Messungen unter räumlich homogener und zeitlich konstanter Beleuchtung, um zu weiter verbesserten Ergebnissen zu gelangen.

In einer weiter verbesserten Ausgestaltung der Erfindung wird die zweite Spannung so gewählt, dass für die gegebene Beleuchtung das Leistungsmaximum der Solarzelle erreicht wird, um die Qualität der Solarzelle praxisgerecht beurteilen zu können. Solarzellen werden grundsätzlich im Leistungsmaximum betrieben. Die Beurteilung der Qualität bezieht sich bei dieser Ausgestaltung auf den Zustand, der regelmäßig im Betrieb maßgeblich ist. Die resultierende Information über die Qualität der Solarzelle ist daher besonders praxisrelevant.

Ist der Quotient anspruchsgemäß ermittelt worden, so werden Werte für die Pixel, mit denen eine Aufnahme getätigt wurde, erhalten, die grundsätzlich nicht zwischen 0 bis 1 betragen können. Um die Beurteilung der Qualität zu erleichtern, wird daher in einer vorteilhaften Ausführungsform eine Normierung vorgenommen. Es werden also vorteilhaft ein oder mehrere Normierungsschritte durchgeführt, die zur Folge haben, dass aus der Bildung des Quotienten schließlich Werte von 0 bis 1 erhalten werden.

Um zu normieren, werden in einer Ausführungsform die Werte des Quotienten mit der thermischen Spannung multipliziert. Im Anschluss daran wird durch die Spannungsdifferenz der dritten und vierten Aufnahmen dividiert. Thermische Spannung meint Boltzmann-Konstante mal absoluter Temperatur der Solarzelle geteilt durch die Elementarladung.

Werden durch Normierung Werte von 0 bis 1 erhalten, so liegt für jedes Pixel ein unmittelbar erkennbare Aussage darüber vor, mit welcher Wahrscheinlichkeit lokal erzeugter Photostrom auch tatsächlich abgegriffen werden kann. Wird für ein Pixel ein Wert 1 ermittelt, so beträgt die Wahrscheinlichkeit 100 %, dass der hier erzeugte Strom auch tatsächlich abgegriffen werden kann. Wird für ein Pixel ein Wert von 0,5 ermittelt, so beträgt die Wahrscheinlichkeit 50 %, dass der hier erzeugte Strom auch tatsächlich abgegriffen werden kann. Wird zum Beispiel für ein Pixel ein Wert von 0,25 ermittelt, so beträgt die Wahrscheinlichkeit 25 %, dass der hier erzeugte Strom auch tatsächlich abgegriffen werden kann.

In einer vorteilhaften Ausgestaltung der Erfindung werden die Werte, die aus der Quotientenbildung resultierten, über alle Pixel gemittelt. Das Ergebnis dieser Mittelung stellt dann ein Maß für die Qualität einer zu beurteilenden Solarzelle dar. Je größer der resultierende Wert ist, umso besser ist die Qualität der Solarzelle.

In einer vorteilhaften Ausgestaltung des anspruchsgemäßen Verfahrens wird eine Spannungskennlinie aufgenommen, umso den maximalen Leistungspunkt einer zu beurteilenden Solarzelle zu ermitteln. Die Solarzelle wird mit konstantem Licht beleuchtet und an die Solarzelle eine sich verändernde Spannung angelegt und der zu jeder Spannung gehörende Strom ermittelt und so eine Strom-Spannungs-Kennlinie ermittelt. Durch diese Kennlinien wird der Punkt der maximalen Leistungsentnahme ermittelt. Wird so beispielsweise ermittelt, dass 0.55 Volt der Punkt maximaler Leistungsentnahme beträgt, so beträgt die Spannung im Arbeitspunkt vorteilhaft 0.55 Volt. Die Spannung im Arbeitspunkt kann aber auch weniger oder mehr als 0.55 V betragen, um das Verfahren mit Erfolg durchführen zu können. In einem Solarmodul oder einem Modulsystem werden obige Spannungswerte als Spannung pro in Serie geschalteter Zelle verstanden.

In einer Ausgestaltung erfolgt die Messung von Lumineszenz mittels eines geeigneten Kamerasystems unter der Bedingung, (1) dass sich die Solarzelle, das Solarmodul oder die Solaranlage unter einer externen künstlichen oder natürlichen Lichtanregung befindet, (2) dass die an der Zelle, am Modul oder der Anlage anliegende Spannung in einer ersten Messung von einem Wert kleiner oder gleich null auf den Wert einer beliebigen positiven Spannung $V_2$ moduliert wird und ein Bild durch Differenzbildung oder durch Lock-In Technik erzeugt wird, (3) dass in einer zweiten Messung die Spannung symmetrisch mit einer Differenz von 20 % oder weniger um die Spannung $V_2$ variiert wird und ein Bild durch Differenzbildung oder durch Lock-In Technik erzeugt wird. (4) Das beschriebene Vorgehen erfolgt bevorzugt unter der Bedingung, dass die Spannung $V_2$ die Spannung $V_{mpp}$ des Punktes der maximalen Leistungsentnahme ist.

In einer Ausgestaltung wird mittels eines Thermografieverfahrens die Qualität der Solarzelle beurteilt. Das Verfahren wird dann um den Punkt maximaler Leistungsentnahme des homogen beleuchteten Solarmoduls oder der Solarzelle durchgeführt, da im Punkt maximaler Leistungsentnahme definitionsgemäß die erste Ableitung der entnommenen Leistung nach der von außen angelegten Spannung 0 ist. Damit ist aber auch die erste Ableitung der dissipierten Leistung nach der von außen angelegten Spannung 0. Bei einer perfekt funktionierenden Solarzelle wären im Punkt maximaler Leistungsentnahme aber alle Punkte bei derselben Spannung im Punkt maximaler Leistungsentnahme bzw. minimaler Dissipation, so dass die erste Ableitung der Dissipation gegenüber der äußeren Spannung an jeder Stelle null ist. Dies ist in der Praxis jedoch nie der Fall. Es resultieren also im Punkt maximaler Leistungsentnahme in der Praxis sowohl positive Werte als auch negative Werte für die erste Ableitung der lokalen Dissipation gegenüber der äußeren Spannung. Dies wird genutzt, um die Qualität zu prüfen. Verfahrensgemäß wird daher die erste Ableitung für jedes Pixel im Punkt der maximalen Leistungsentnahme ermittelt.

Zur Durchführung werden wie im Fall der Lumineszenzmessung vier Bilder bei den angelegten Spannungen $V_1$ bis $V_4$ aufgenommen, wobei die Spannung $V_1$ gleich null ist (keine Leistungsentnahme), die Spannung $V_2$ dem Punkt maximaler Leistungsentnahme entspricht, die Spannung $V_3$ größer null aber kleiner als $V_2$ ist und die Spannungen $V_4$ größer als die Spannung $V_2$ ist. Zunächst wird das zur Spannung $V_1$ gehörende Bild von dem Bild zu $V_2$ pixelweise abgezogen, um ein erstes Differenzbild D1 zu erhalten. Der Mittelwert M aller Pixel dieses Differenzbilds ist dann proportional zur mittleren maximalen Leistungsentnahme. Dann wird das Bild von $V_3$ von dem Bild von $V_4$ pixelweise abgezogen, um ein zweites Differenzbild D2 zu erhalten. Sind die Spannungen von $V_3$ und $V_4$ wie beschrieben um den Punkt maximaler Leistungsentnahme angelegt besteht dieses zweite Differenzbild aus positiven und negativen Werten. Werden diese positiven und negativen Werte durch den oben ermittelten Mittelwert geteilt entspricht jeder Pixelwert der prozentualen Abweichung der lokalen Leistungsdissipation vom Mittelwert. Die auf diese Weise erhaltene Abbildung stellt somit quantitativ die Inhomogenität der Leistungsdissipation dar. Hat beispielsweise das Differenzbild D1 einen Mittelwert von 2000 und hat ein Bildpunkt im Differenzbild D2 einen Wert von 200, so entspricht die differentielle Dissipation (Leistungsverbrauch) in diesem Punkt 10 % der mittleren maximalen Leistungsentnahme. Bei negativen Werten im Differenzbild D2 hat die entsprechende Stelle ihren eigenen Punkt maximaler Leistung noch nicht erreicht. Ein Wert von beispielsweise -200 entspricht dann einer Vergrößerung der Leistungsentnahme (Verringerung der Dissipation, d.h. Leistungserzeugung) um 10 % der mittleren maximalen Leistungsentnahme.

Bevorzugt wird zur Durchführung des Thermografieverfahrens eine Lock-in Technik angewendet, um Probleme zu minimieren, die auf Rauschen zurückzuführen sind. Bei dieser Ausgestaltung wird die angelegte Spannung periodisch zwischen zwei Spannungswerten variiert und die Differenzbildung wird durch eine Lock-in Technik durchgeführt, jedoch nicht nur einfach, sondern vielfach so zum Beispiel 100 oder 1000-fach. Zu berücksichtigen ist bei einer Lock-in Technik für die Thermografie, dass die Temperaturänderungen auf dem Modul mit einer gewissen zeitlichen Verzögerung zur angelegten Spannung auftreten. Diesem Effekt wird in der Lock-in Technik dadurch Rechnung getragen, dass für jedes Pixel sowohl eine Amplitude (proportional zur maximal während der Modulation auftretenden Temperatur) als auch ein Phasenwinkel (steht für die zeitliche Verzögerung des Temperatursignals gegenüber dem Anregungssignal) errechnet werden. Um das Temperatursignal zu erhalten, das der lokalen Leistung proportional ist, wird das entstandene Bild nach bekannten Verfahren um die Phasenverschiebung korrigiert. Die so errechneten Differenzbilder D1 (Variation der Spannung zwischen $V_1$ und $V_2$) und D2 (Variation der Spannung zwischen $V_3$ und $V_4$) sind dann unmittelbares Resultat der Lock-in Technik. Das weitere Vorgehen der Bildauswertung bleibt wie beschrieben.

Die Lock-in Technik zur Differenzbildung kommt bevorzugt auch beim Lumineszenzverfahren zur Anwendung, da auch hier durch die Lock-in Technik Rauschen unterdrückt und die Präzision erhöht wird. Zudem entstehen auch hier die Differenzbilder D1 und D2 unmittelbar. Im Gegensatz zur Thermografie werden bei der Lumineszenz keine Phasenverschiebungen durch die Lock-in Technik erwartet.

In einer bevorzugten Ausführungsform erfolgt die Messung von Thermografie mittels eines geeigneten Kamerasystems unter der Bedingung, dass sich die Solarzelle, das Solarmodul oder die Solaranlage nahe an oder in ihrem Punkt maximaler Leistungsentnahme unter einer externen künstlichen oder natürlichen Lichtanregung befindet. Es werden jeweils ein Bild bei einer Spannung V3, die vorzugsweise um 20 % oder weniger gegenüber der Spannung (Vmpp) des Punktes maximaler Leistung reduziert ist, und ein Bild bei einer Spannung V4, die bevorzugt um 20 % oder weniger gegenüber der Spannung des Punktes maximaler Leistung erhöht ist, aufgenommen. Beide Bilder werden ihrerseits wieder durch Lock-in Technik unter periodischer Modulation der angelegten Spannung zwischen null und der Spannung des jeweiligen Arbeitspunktes erzeugt. Durch Differenzbildung aus den beiden Bildern wird ein neues Bild entsprechend D2 erzeugt. Der Mittelwert M, der in obiger Ausführung als Mittelwert des Differenzbildes D1 bestimmt wurde, kann in dieser Ausführung als gemeinsamer Mittelwert beider Bilder (bei V3 und V4) bestimmt werden.

Die vorgeschlagenen Verfahren erlauben eine eindeutige und quantitative Interpretation der Ergebnisse. Im Falle von Thermografiebildern ergibt sich unmittelbar eine räumlich aufgelöste Messung des lokalen Leistungsverbrauchs bzw. der Leistungserzeugung. Im Fall der Lumineszenz ergibt sich eine räumlich aufgelöste Messung des lokalen Beitrags zur maximalen Leistung des Solarmoduls bzw. der Solarzelle. Das heißt, beide Verfahren liefern eine intuitive und quantitative Abbildung der Qualität des Solarmoduls bzw. der Solarzelle.

Die Verfahren werden bevorzugt angewendet für:

(1) Qualitätskontrolle von Solarzellen und Solarmodulen, speziell produktionsnahe automatisierte Verfahren unter künstlicher Beleuchtung.

(2) Fehleranalyse von Solarmodulen vor ihrer Installation unter künstlicher oder natürlicher Beleuchtung, speziell auf Transportschäden.

(3) Fehleranalyse von ganzen Photovoltaikanlagen nach Installation und nach längerer Laufzeit unter natürlicher Beleuchtung, speziell Verschmutzung, Degradation oder Beschädigung einzelner Module.

Nachfolgend werden mathematische Hintergründe erläutert.

Thermografie

Die dissipierte Leistung $P_d$ in einem Solarmodul ergibt sich aus der Differenz der eingestrahlten Leistung Pin und der extrahierten Leistung $P_{ex}$. Am Punkt maximaler Leistungextraktion ergibt sich somit ein Minimum der dissipierten Leistung, d.h. kleine Variationen $\Delta V_{ext}$ der externen Spannung $V_{ext}$ führen zu keiner Änderung der dissipierten Leistung.

$$\frac{\Delta P_d}{\Delta V_{ext}} \approx \frac{d}{dV_{ext}}(P_{in} - P_{ex}) = 0 \qquad (1)$$

Wegen der Leistungserhaltung gilt für die lokal dissipierte Leistungdichte $p_d$ integriert über die gesamte Fläche A der Zelle, des Moduls, der Anlage

$$\frac{\Delta P_d}{\Delta V_{ext}} \approx \int_A \frac{d}{dV_{ext}} p_d \, dA = 0 \, . \qquad (2)$$

Eine modulierte Messung der differentiellen Dissipation $dp_d/dV_{ext}$ durchgeführt im Punkt maximaler Leistungsentnahme führt deswegen zu einem Bild, das entweder überall null ist oder zu gleichen Teilen aus negativen und positiven Anteilen besteht. Dasselbe Resultat entsteht durch Differenzbildung zwischen einem Bild, das bei einer Spannung oberhalb, und einem Bild, das bei einer Spannung unterhalb, der Spannung maximaler Leistungsentnahme aufgenommen wurde.

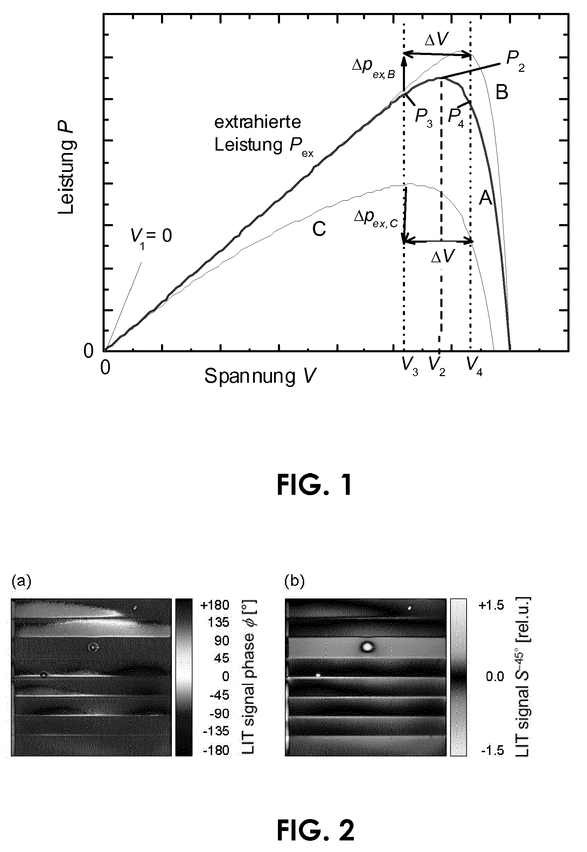

Figur 1 zeigt eine extrahierte Leistung $P_{ex}$ als Funktion der Modulspannung V. Sei die Kurve A die mittlere Leistungs/Spannungskennlinie des Moduls und die Kurven B und C die lokale Leistungsentnahme an einer Stelle B bzw. C. Die Differenz $P_4$-$P_3$ der globalen Leistungsentnahme (Kurve A) bei den Spannungen $V_4$ und $V_3$ ist (nahezu) null. Die Differenzen $\Delta p_{ex,B}$ und $\Delta p_{ex,C}$ der lokal entnommenen Leistungen sind entweder positiv (Kurve B) oder negativ (Kurve C). Das Vorzeichen der differentiellen lokal dissipierten Leistungen $\Delta p_{diss,A/B}$ ist gegenüber dem der differentiellen extrahierten Leistungen $\Delta p_{ex,A/B}$ umgekehrt. Stellen, deren lokale Leistungsentnahme positiv (negativ) ist, haben in der Thermografie eine differentielle Dissipation mit negativem (positivem) Vorzeichen.

Vorgehen:

Zunächst wird aus der Strom-Spannungskennlinie des Bauelements die Leistungskennlinie (Fig. 1) errechnet. Aus der Leistungskennlinie (Kurve A) bestimmen sich dann die Spannung $V_2 = V_{mpp}$ maximaler Leistungsentnahme und zwei Spannungspunkte $V_3$ und $V_4$ links bzw. rechts von $V_2$, so dass die Differenz $P_2$-$P_1$ der globalen Leistungsent-

nahme (nahezu) null ist. Dann wird die Spannung periodisch zwischen $V_3$ und $V_4$ variiert und die differentielle Leistungsentnahme direkt durch Lock-In Thermografie gemessen. Eine zweite Möglichkeit besteht darin, dass ein Thermografiebild 1 durch periodische Modulation der angelegten Spannung zwischen 0 und $V_3$ und ein Bild 2 durch periodische Modulation der angelegten Spannung zwischen 0 und $V_4$ erzeugt wird und anschließend die Differenz zwischen Bild 2 und Bild 1 bestimmt wird.

Die detektierten Thermografie-Signale sind proportional zur lokalen Temperatur der Zelle, des Moduls oder der Anlage. Aufgrund der thermischen Trägheit ist die Temperatur bei periodischer Anregung gegenüber der dissipierten Leistung phasenverschoben. Um positive und negative Signale gemäß Gleichung (2) zu erhalten, wird daher das detektierte Signal um diesen Phasenschub korrigiert werden. Nach dieser Korrektur entsteht ein Bild (vgl. Abb. 2) mit Bereichen negativer Signale (für Bereiche, in denen die Zelle, das Modul, oder die Anlage einen Arbeitspunkt hat, der sich bezogen auf den gewählten Arbeitspunkt bei größeren Spannungen befindet, Kurve B in Abb. 1) und positiven Signale (für schadhafte Bereiche mit niedrigerem Arbeitspunkt, Kurve C in Abb. 1). Aus den lokalen Signalen kann durch Integration des Betragsquadrats oder nur der positiven Signalanteile (schadhafte Bereiche) eine Maßzahl zur Bewertung der photovoltaischen Qualität einer Zelle, eines Moduls, einer Anlage erzeugt werden. Im Idealfall der homogenen Leistungsentnahme wäre sowohl das Integral des Betragsquadrats als auch das Integral des positiven Signalanteils null.

Die Figur 2 zeigt eine Abbildung der (a) Phasenlage des (nichtphasengedrehten) Originalsignals und (b) der Amplitude des um 45° gedrehten differentiellen Thermografiesignals eines Minimoduls aus amorphem Silizium, gemessen am Punkt maximaler Leistungsentnahme. Die oberen beiden Zellen haben überwiegend eine Phasenlage von -45° (a), was für Dünnschichtsolarzellen ein positives Vorzeichen für die Leistungsdissipation bedeutet (b). Es wird also Energie verbraucht. In den übrigen 6 Zellen liegt die Phase (a) vorwiegend um 135°, was der Erzeugung von Leistung entspricht (negatives Signal in b). Im Zentrum der Defekte in der ersten, dritten und vierten Zelle von oben ist das Signal positiv.

Der mathematische Hintergrund zur Lumineszenz wird nachfolgend beschrieben. Die lokale Lumiszenzemission $\phi_{em}$ einer Solarzelle unter Beleuchtung und bei lokal anliegender Spannung $V$ wird beschrieben durch [U. Rau, IEEE J. Photovoltaics 2, 169-172 (2012)]

$$\phi_{em} = Q_e \phi_{bb} \exp\left(\frac{V}{V_{th}}\right) + \phi_{sc} \qquad (3)$$

wobei $Q_e$ die lokale Quantenausbeute, $\phi_{bb}$ die spektrale Emission eines schwarzen Körpers bei der Temperatur der Zelle, $V$ die lokale Spannung an jeder Position in der Solarzelle, $V_{th}$ die thermische Spannung, und $\phi_{sc}$ die Photolumineszenzemission der Zelle unter Kurzschlussbedingungen bezeichnet. Das photographisch detektierte Signal $S_{cam}$ ergibt sich somit zu

$$S_{cam}(V) = \int Q_{cam} Q_e \phi_{bb} dE \exp\left(\frac{V}{V_{th}}\right) + \int \phi_{sc} dE = S_0 \exp\left(\frac{V}{V_{th}}\right) + S_{sc} \qquad (4)$$

wobei $Q_{cam}$ die Quantenausbeute (spektrale Empfindlichkeit) des Kamerasystems bezeichnet. Das detektierte Signal besteht somit aus einem spannungsabhängigen und einem spannungsunabhängigen Anteil. Der letztere wird zudem verstärkt durch schwer vermeidbare Reflexionen des Anregungslichts. Die lokale Spannung $V$ ist hierbei eine Funktion der externen an dem Bauelement angelegten Spannung $V_{ext}$. Durch Differenzbildung oder Lock-In Technik erhalten wir das Differenzsignal

$$L_{cam}(V(V_{ext,2})) = S_{cam}(V(V_{ext,2})) - S_{cam}(V(V_{ext,1} \leq 0)) \approx S_0 \exp\left(\frac{V(V_{ext,2})}{V_{th}}\right) \qquad (5)$$

zwischen den beiden externen Arbeitspunkten $V_{ext,1}$ und $V_{ext,2}$ wobei $V_{ext,1}$ so gewählt wird, dass das zugehörige spannungsinduzierte Signal gemäß Gl. (4) gegenüber dem Signal bei $V_{ext,1}$ vernachlässigbar ist. Dies wird in den meisten Fällen durch $V_{ext,1} = 0$ (Kurzschluss) erreicht. In extremen Fällen sind jedoch negative Vorspannungen notwendig. Gl. (5) eliminiert den spannungsunabhängigen Beitrag von Gl. (4).

Im zweiten Schritt untersuchen wir kleine Variation $\Delta V_{klein}$ der an den externen Kontakten anliegenden Spannung um eine konstante Bias-Spannung $V_b = V_{ext,2}$. Hier benutzen wir zunächst die erste Ableitung (Differential)

$$\frac{d}{dV_{ext}} S_{cam} = S'_{cam} = \frac{dV}{dV_{ext}} \frac{S_0}{V_{th}} \exp\left(\frac{V(V_b)}{V_{th}}\right). \tag{6}$$

Für sehr kleine aber endliche Variationen der Spannung $\Delta V_{klein}$ geht der Differenzenquotient in den Differentialquotienten über und wir erhalten aus Gl. (5) und Gl. (6) das Differenz- oder Lock-In Signal

$$\frac{\Delta l_{cam}(V_b)}{\Delta V_{klein}} \approx \frac{\Delta V}{\Delta V_{klein}} \frac{S_0}{V_{th}} \exp\left(\frac{V(V_b)}{V_{th}}\right). \tag{7}$$

Der Quotient aus Gl. (7) und (5)

$$\frac{\Delta l_{cam}}{\Delta V_{klein}} \frac{1}{L_{cam}} = \frac{\Delta V}{\Delta V_{klein}} \frac{1}{V_{th}} \tag{8}$$

ist schließlich proportional zur lokalen Variation $\Delta V$ der an der lokalen Zellfläche anliegenden Diodenspannung. Umorganisation von Gl. (8) zeigt wie aus den gemessenen Größen $\Delta l_{cam}$ und $L_{cam}$ sowie aus den bekannten Größen $\Delta V_{klein}$ und $V_{th}$ das Verhältnis

$$\frac{\Delta V}{\Delta V_{klein}} = \frac{\Delta l_{cam}}{\Delta V_{klein}} \frac{V_{th}}{L_{cam}}. \tag{9}$$

bestimmt werden kann. Das Verhältnis $\Delta V/\Delta V_{klein}$, also zwischen der lokalen Spannungsvariation $\Delta V$ und der Variation der von außen angelegten Spannung $\Delta V_{klein}$ lässt sich interpretieren [J. Wong, M. A. Green, Phys. Rev. B 85, 235205 (2012)] als die lokale Stromsammeleffizienz

$$f = \frac{\Delta I_{klein}}{\Delta I} = \frac{\Delta V}{\Delta V_{klein}} = \frac{\Delta l_{cam}}{\Delta V_{klein}} \frac{V_{th}}{L_{cam}}. \tag{10}$$

Die Stromsammeleffizienz f ist in jedem Fall ein Wert zwischen null (keine lokale photovoltaische Aktivität, d.h. ein zusätzlicher lokaler Photostrom $\Delta I$ führt zu keinem zusätzlichen Strom $\Delta I_{klein}$ an den Kontakten) und eins (perfekte lokale photovoltaische Aktivität, d.h. eine zusätzlicher lokaler Photostrom $\Delta I$ führt zu einem zusätzlichen Strom $\Delta I_{klen}$ an den Kontakten mit $\Delta I_{klein} = \Delta I$) und kann direkt als lokales Qualitätsmerkmal verwendet werden.

Eine interessante, zusätzliche Interpretationsmöglichkeit gibt sich aus der Leistungsbilanz der Solarzelle, des Moduls oder der Anlage. Die extrahierte Leistung $P_{ext}$ errechnet sich aus dem Produkt der externen Spannung und des externen Stroms. Letzterer setzt sich aus dem Photostrom $I_{ph}$ und dem Dunkelstrom $I_D$ zusammen. Es gilt

$$P_{ext} = \left(I_{ph} - I_D\right)V_{ext}. \tag{11}$$

Eine kleine Änderung $\Delta V_{klein}$ der externen Spannung und eine kleine Änderung $\Delta I_{ph}$ des Photostroms führen zu einer Änderung der extrahierten Leistung gemäß

$$\Delta P_{ext} = \left(I_{ph} - I_D - \frac{\Delta I_D}{\Delta V_{klein}} V_{ext}\right)\Delta V_{klein} + V_{ext}\Delta I_{ph} \tag{12}$$

unter Verwendung des totalen Differentials von $P_{ext} = P_{ext}(I_{ph}, V_{ext})$.

Da sich die globale Änderung des Photostroms aus der Summe (oder dem Integral) über die lokalen Beiträge des Photostroms ergeben, gilt bei konstanter Spannung $V_{ext}$ für die Leistungsänderung

$$\Delta P_{ext}\big|_{V_{ext}=konst.} = V_{ext}\Delta I_{ph} = V_{ext}\int \Delta j_{ph}dA = V_{ext}\Delta I \int f dA \qquad (13)$$

bei einer zusätzlichen Photostromgeneration $\Delta I$. Überdies verschwindet am Punkt maximaler Leistungsentnahme der Klammerausdruck in Gl. (12), so dass für die Änderung der maximal entnehmbaren Leistung gilt

$$\Delta P_{max} = V_{mpp}\Delta I_{ph} = V_{mpp}\int \Delta j_{ph}dA = V_{mpp}\Delta I \int f dA . \qquad (14)$$

Somit quantifiziert die Sammelwahrscheinlichkeit *f* auch den lokalen Beitrag zur Leistungsänderung [Gl. (13)] an einem beliebigen Spannungspunkt, bzw. den lokalen Beitrag zur Änderung der maximalen Leistung [Gl. (14)], falls das Bauelement an seinem Punkt maximaler Leistung betrieben wird. Daher ist unter diesen Arbeitsbedingungen die Abbildung von *f* nach den beschriebenen Methoden von direkter, einfach zu interpretierenden Relevanz.

Durch eine Integration von *f* über eine Zell-, Modul- oder Anlagenfläche kann dann direkt die photovoltaische Qualität der betreffenden photovoltaischen (Teil-)Komponenten bestimmt werden.

Vorgehen:

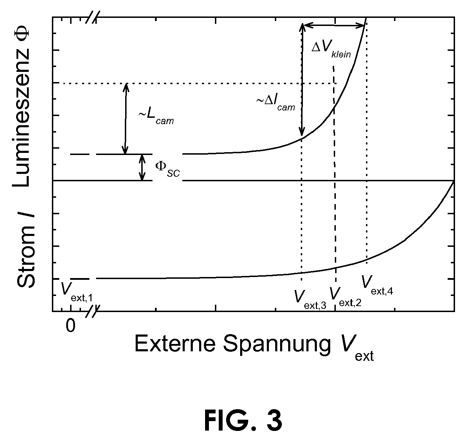

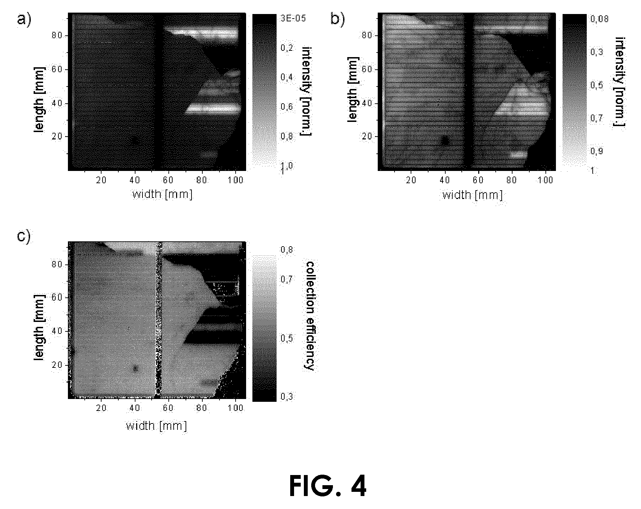

Zunächst wird die Strom-Spannungskennlinie des Bauelements bestimmt (siehe Figure 3). Eine erste differentielle Lumineszenzmessung (Großsignal in Figure 4a) wird durch abwechselnde Aufnahmen bei einer Spannung $V_0 = V_{ext,1} \leq 0$ V und bei der Bias-Spannung $V_b = V_{ext,2}$ erzeugt. Das Bild 1 entsteht durch die pixelweise Differenzbildung $L_i = \sum_n [S_{i,n}(V_b) - S_{i,n}(V_0)]/n$, $i = 1$ ...Anzahl der Pixel, $n = 1$...Anzahl der Perioden. Durch dieses Vorgehen wird die zusätzliche Lumineszenz $\phi_{sc}$ unterdrückt (vgl. Gl. (1) und Figure 3). Die Bias Spannung $V_b$ kann insbesondere der Spannung $V_{mpp}$ aber auch anderen Spannungen entsprechen. Eine zweite Lumineszenzmessung (Kleinsignal in Figur 4b) wird durch Variation der angelegten Spannung zwischen zwei Spannungspunkten $V_{ext,3} = V_b - \Delta V_{klein}/2$ und $V_{ext,4} = V_b + \Delta V_{klein}/2$ erzeugt (siehe Figur 3). Das Bild 2 entsteht durch die pixelweise Differenzbildung $\Delta I_i = \sum_n [S_{i,n}(V_2) - S_{i,n}(V_1)]/n$. Die Aufnahmen 1 und 2 werden bei gleicher Kameraempfindlichkeit, Belichtungszeit und Anzahl der Perioden aufgenommen, so dass beide Aufnahmen quantitativ vergleichbar sind. Die Sammelwahrscheinlichkeit (Abb. 4c) ist dann durch Gl. (10) gegeben.

Eine alternative Vorgehensweise verwendet nur die Spannungspunkte $V_0$, $V_1$, und $V_2$. Das Signal $S_i(1)$ wird dann durch $L_i = \sum_n \{[S_{i,n}(V_2) + S_{i,n}(V_1)]/2 - S_i(V_0)\}/n$ berechnet, das Signal $\Delta I_i(2)$ wie gehabt.

Die Figuren 4 zeigen eine Abbildung des (Figur 4a) Großsignalbildes $L_{cam}$ und (Figur 4b) des Kleinsignalbildes $\Delta I_{cam}$ einer beschädigten Siliziumsolarzelle. Figur 4c zeigt die aus den Bildern (Figur 4a) und (Figur 4b) nach Gl. (10) bestimmte Sammlungseffizienz f. Lokale Eigenschaften, die dem Vorfaktor So in Gl. (5) und Gl. (7) entsprechen wie z.B. Versetzungslinien oder Unterschiede zwischen einzelnen Körnern, sind in (Figur 4a) und (Figur 4b) noch zu sehen, während Figur 4c nur noch die Sammelwahrscheinlichkeit darstellt. Werte nahe eins zeigen nahezu perfekte Eigenschaften der Stromsammlung, während dunkle Grauwerte auf schlechte Stromsammlung hinweisen.

**Patentansprüche**

1. Verfahren für eine Kontrolle der Qualität einer Solarzelle mit den folgenden Schritten:

 - an eine Solarzelle wird eine erste Spannung ($V_1$) kleiner oder gleich Null angelegt und das emittierte Licht der Solarzelle fotografiert, um so ein erstes Bild zu erhalten;
 - an die Solarzelle wird eine zweite Spannung ($V_2$) größer als Null angelegt und das emittierte Licht der Solarzelle fotografiert, um so ein zweites Bild zu erhalten;
 - an die Solarzelle wird eine dritte Spannung ($V_3$) größer als Null und kleiner als die zweite Spannung angelegt und das emittierte Licht der Solarzelle fotografiert, um so ein drittes Bild zu erhalten;
 - an die Solarzelle wird eine vierte Spannung ($V_4$) größer als die zweite und/oder dritte Spannung angelegt und das emittierte Licht der Solarzelle fotografiert, um so ein viertes Bild zu erhalten;
 - es wird eine erste Differenz (D1) zwischen den Pixelwerten der Fotografien bei der ersten und zweiten Spannung gebildet; und
 - es wird eine zweite Differenz (D2) zwischen den Bildern zur dritten und vierten Spannung gebildet; und
 - es wird der Quotient zwischen der ersten und der zweiten Differenz gebildet.

2. Verfahren nach Anspruch 1, bei dem die Differenz zwischen vierter und zweiter Spannung (vierte Spannung - zweite Spannung) kleiner als die zweite Spannung ist und zwar vorzugsweise um ein Mehrfaches kleiner und / oder bei dem die Differenz zwischen zweiter und dritter Spannung (zweite Spannung - dritte Spannung) kleiner als die zweite Spannung ist und zwar vorzugsweise um ein Mehrfaches kleiner.

3. Verfahren nach einem der vorhergehenden Ansprüche, wobei die Differenz zwischen vierter und zweiter Spannung (vierte Spannung - zweite Spannung) bezogen auf eine einzelne Solarzelle weniger als 0,1 Volt, bevorzugt weniger als 0,01 Volt beträgt und/ oder wobei die Differenz zwischen zweiter und dritter Spannung (zweite Spannung - dritte Spannung) weniger als 0,1 Volt, bevorzugt weniger als 0,01 Volt beträgt.

4. Verfahren nach einem der vorhergehenden Ansprüche, wobei ein oder mehrere Normierungsschritte durchgeführt werden, die zur Folge haben, dass aus der Bildung des Quotienten Werte von 0 bis 1 erhalten werden.

5. Verfahren nach dem vorhergehenden Anspruch, wobei Werte des Quotienten mit der thermischen Spannung multipliziert werden und im Anschluss daran wird durch die Spannungsdifferenz der dritten und vierten Aufnahmen dividiert.

6. Verfahren nach einem der vorhergehenden Ansprüche, wobei die Werte, die aus der Quotientenbildung resultieren, über alle Pixel gemittelt werden.

7. Verfahren für eine Kontrolle der Qualität einer Solarzelle mit den folgenden Schritten:

- an eine Solarzelle wird eine erste Spannung ($V_1$) kleiner oder gleich Null angelegt und das emittierte Licht der Solarzelle fotografiert, um so ein erstes Bild zu erhalten;
- an die Solarzelle wird eine zweite Spannung ($V_2$,) größer als Null angelegt und das emittierte Licht der Solarzelle fotografiert, um so ein zweites Bild zu erhalten;
- an die Solarzelle wird eine dritte Spannung ($V_3$) größer als Null und kleiner als die zweite Spannung angelegt und das emittierte Licht der Solarzelle fotografiert, um so ein drittes Bild zu erhalten;
- an die Solarzelle wird eine vierte Spannung ($V_4$) größer als die zweite und/oder dritte Spannung angelegt und das emittierte Licht der Solarzelle fotografiert, um so ein viertes Bild zu erhalten;
- als zweite Spannung ($V_2$) wird der Punkt maximaler Leistungsentnahme gewählt,
- und es wird das zur ersten Spannung ($V_1$) gehörende Bild von dem Bild zur zweiten Spannung ($V_2$) oder einem Bild, welches als Mittelwert des dritten und vierten Bildes ermittelt wird, pixelweise abgezogen, um ein erstes Differenzbild (D1) zu erhalten;
- es wird der Mittelwert (M) der Pixel dieses Differenzbilds gebildet;
- es wird das Bild zu der dritten Spannung ($V_3$) von dem Bild zu der vierten Spannung ($V_4$) pixelweise abgezogen, um ein zweites Differenzbild (D2) zu erhalten;
- es werden die Werte des zweiten Differenzbildes durch den ermittelten Mittelwert geteilt.

8. Verfahren nach einem der vorhergehenden Ansprüche, wobei die Solarzelle mit Licht mit konstanter Lichtintensität beleuchtet wird.

9. Verfahren nach einem der zwei vorhergehenden Ansprüche, wobei eine Spannungskennlinie aufgenommen wird, um so den maximalen Leistungspunkt einer zu beurteilenden Solarzelle zu ermitteln.

10. Verfahren nach einem der vorhergehenden Ansprüche, wobei die Messung von Lumineszenz mittels eines Kamerasystems unter der Bedingung erfolgt, (1) dass sich die Solarzelle unter einer externen künstlichen oder natürlichen Lichtanregung befindet, (2) dass die an der Solarzelle anliegende Spannung in einer ersten Messung von einem Wert kleiner oder gleich null auf den Wert einer beliebigen positiven Spannung $V_b$ moduliert wird und ein Bild durch Differenzbildung oder durch Lock-In Technik erzeugt wird, (3) dass in einer zweiten Messung die Spannung symmetrisch mit einer Differenz von 20 % oder weniger um die Spannung ($V_b$) variiert wird und ein Bild durch Differenzbildung oder durch Lock-In Technik erzeugt wird.

11. Verfahren nach einem der vorhergehenden Ansprüche, wobei eine Lock-in Technik zur Durchführung eines Thermografieverfahrens anstatt eines Lumineszenzverfahrens angewendet wird.

12. Verfahren nach dem vorhergehenden Anspruch, nachdem sich das Bauelement unter konstanter und homogener, künstlicher oder natürlicher Beleuchtung befindet und ein Thermografieverfahren unter den Bedingungen von Anspruch 2 angewandt wird.

13. Verfahren nach dem vorhergehenden Anspruch, bei dem ein Thermografieverfahren unter den Bedingungen der Ansprüchen 9 und 10 angewandt wird.

**Claims**

1. A method for controlling the quality of a solar cell, comprising the following steps:

   - a first voltage ($V_1$) which is less than or equal to zero will be applied to a solar cell and the light emitted by the solar cell will be photographed, in order to thus receive a first image;
   - a second voltage ($V_2$) which is greater than zero will be applied to the solar cell and the light emitted by the solar cell will be photographed, in order to thus receive a second image;
   - a third voltage ($V_3$) which is greater than zero and smaller than the second voltage will be applied to the solar cell and the light emitted by the solar cell will be photographed, in order to thus receive a third image;
   - a fourth voltage ($V_4$) which is greater than the second and/or third voltage will be applied to the solar cell and the light emitted by the solar cell will be photographed, in order to thus receive a fourth image;
   - a first difference (D1) between the pixel values of the photographs of first and second voltage will be determined; and
   - a second difference (D2) between the images of the third and fourth voltage will be determined; and
   - the quotient between the first and the second difference will be calculated.

2. A method according to claim 1, wherein the difference between the fourth and the second voltage (fourth voltage - second voltage) is smaller, preferably several times smaller than the second voltage and/or wherein the difference between the second and the third voltage (second voltage - third voltage) is smaller, preferably several times smaller than the second voltage.

3. A method according to one of the preceding claims, wherein the difference between the fourth and the second voltage (fourth voltage - second voltage) with respect to one individual solar cell is less than 0.1 Volt, preferably less than 0.01 Volt, and/or wherein the difference between the second and third voltage (second voltage - third voltage) is less than 0.1 Volt, preferably less than 0.01 Volt.

4. A method according to one of the preceding claims, wherein one or more normalization steps will be carried out, which have the effect that values comprised between 0 and 1 will be obtained from the calculation of the quotient.

5. A method according to one of the preceding claims, wherein values of the quotient will be multiplied by the thermal voltage and will afterwards be divided by the voltage difference of the third and fourth images.

6. A method according to one of the preceding claims, wherein the values which result from the calculation of the quotient will be averaged over all pixels.

7. A method for controlling the quality of a solar cell, comprising the following steps:

   - a first voltage ($V_1$) which is less than or equal to zero will be applied to a solar cell and the light emitted by the solar cell will be photographed, in order to thus receive a first image;
   - a second voltage ($V_2$) which is greater than zero will be applied to the solar cell and the light emitted by the solar cell will be photographed, in order to thus receive a second image;
   - a third voltage ($V_3$) which is greater than zero and smaller than the second voltage will be applied to the solar cell and the light emitted by the solar cell will be photographed, in order to thus receive a third image;
   - a fourth voltage ($V_4$) which is greater than the second and/or third voltage will be applied to the solar cell and the light emitted by the solar cell will be photographed, in order to thus receive a fourth image;
   - the point of maximum energy usage will be selected as second voltage ($V_2$),
   - and the image belonging to the first voltage ($V_1$) will be deducted pixel by pixel from the image with respect to the second voltage ($V_2$) or from an image which will be determined as the mean value of the third and fourth image, in order to obtain a first difference image (D1);
   - the mean value (M) of the pixels of this difference image will be determined;
   - the image with respect to the third voltage ($V_3$) will be deducted pixel by pixel from the image with respect to

the fourth voltage ($V_4$), in ordee to obtain a second difference image (D2);
- the values of the second difference image will be divided by the determined mean value.

8. A method according to one of the preceding claims, wherein the solar cell will be illuminated by light having a constant light intensity.

9. A method according to one of the two preceding claims, wherein a voltage characteristic curve will be recorded, in order to determine the maximum energy output point of a solar cell to be evaluated.

10. A method according to one of the preceding claims, wherein the measurement of luminescence will be effected by means of a camera system on condition that (1) the solar cell is under an external artificial or natural light excitation, that (2) in a first measurement, the voltage being applied to the solar cell will be modulated by a value smaller than or equal to zero to the value of any positive voltage ($V_b$) and an image will be produced by means of subtraction or lock-in technique, that (3) in a second measurement, the voltage will be symmetrically varied with a difference of 20 % or less by the voltage ($V_b$) and an image will be produced by means of subtraction or lock-in technique.

11. A method according to one of the preceding claims, wherein a lock-in technique will be used for carrying out a thermographic method instead of a luminescence method.

12. A method according to the preceding claim, in which the component is under constant and homogenous, artificial or natural illumination and a thermographic method will be used under the conditions of claim 2.

13. A method according to the preceding claim, in which a thermographic method will be used under the conditions of the claims 9 and 10.

**Revendications**

1. Procédé de contrôle de la qualité d'une cellule solaire, comprenant les étapes suivantes :

    - on applique une première tension ($V_1$), qui est inférieure ou égaie à zéro, à une cellule solaire et on photographie la lumière émise par la cellule solaire pour ainsi obtenir une première image ;
    - on applique une deuxième tension ($V_2$), qui est supérieure à zéro, à la cellule solaire et on photographie la lumière émise par la cellule solaire pour ainsi obtenir une deuxième image ;
    - on applique une troisième tension ($V_3$), qui est supérieure à zéro et inférieure à la deuxième tension, à la cellule solaire et on photographie la lumière émise par la cellule solaire pour ainsi obtenir une troisième image ;
    - on applique une quatrième tension ($V_4$), qui est supérieure à la deuxième et/ou troisième tension, à la cellule solaire et on photographie la lumière émise par la cellule solaire pour ainsi obtenir une quatrième image ;
    - on détermine une première différence (D1) entre les valeurs de pixel des photographies prises par rapport à la première et la deuxième tension ; et
    - on détermine une deuxième différence (D2) entre les images par rapport à la troisième et à la quatrième tension ; et
    - on calcule le quotient entre la première et la deuxième différence.

2. Procédé selon la revendication 1, dans lequel la différence entre la quatrième et la deuxième tension (quatrième tension - deuxième tension) est inférieure, de préférence plusieurs fois inférieure à la deuxième tension, et/ou dans lequel la différence entre la deuxième et la troisième tension (deuxième tension - troisième tension) est inférieure, de préférence plusieurs fois inférieure à la deuxième tension.

3. Procédé selon l'une des revendications précédentes, dans lequel la différence entre la quatrième et la deuxième tension (quatrième tension - deuxième tension) par rapport à une cellule solaire individuelle est inférieure à 0,1 Volt, de préférence inférieure à 0,01 Volt, et/ou la différence entre la deuxième et la troisième tension (deuxième tension - troisième tension) est inférieure à 0,1 Volt, de préférence inférieure à 0,01 Volt.

4. Procédé selon l'une des revendications précédentes, dans lequel on effectue une ou plusieurs étapes de normalisation, qui ont pour effet que des valeurs comprises entre 0 et 1 sont obtenues du calcul du quotient.

5. Procédé selon la revendication précédente, dans lequel on multiplie des valeurs du quotient par la tension thermique et ensuite on les divise par la différence de tension des troisièmes et quatrièmes images.

6. Procédé selon l'une des revendications précédentes, dans lequel on établit la moyenne des valeurs, qui résultent du calcul du quotient, sur tous les pixels.

7. Procédé de contrôle de la qualité d'une cellule solaire, comprenant les étapes suivantes :

- on applique une première tension ($V_1$), qui est inférieure ou égale à zéro, à une cellule solaire et on photographie la lumière émise par la cellule solaire pour ainsi obtenir une première image ;
- on applique une deuxième tension ($V_2$), qui est supérieure à zéro, à la cellule solaire et on photographie la lumière émise par la cellule solaire pour ainsi obtenir une deuxième image ;
- on applique une troisième tension ($V_3$), qui est supérieure à zéro et inférieure à la deuxième tension, à la cellule solaire et on photographie la lumière émise par la cellule solaire pour ainsi obtenir une troisième image ;
- on applique une quatrième tension ($V_4$), qui est supérieure à la deuxième et/ou troisième tension, à la cellule solaire et on photographie la lumière émise par la cellule solaire pour ainsi obtenir une quatrième image ;
- on sélectionne le point de prélèvement maximal d'énergie comme deuxième tension ($V_2$),
- on soustrait pixel par pixel l'image appartenant à la première tension ($V_1$) de l'image par rapport à la deuxième tension ($V_2$) ou d'une image qui est déterminée comme valeur moyenne de la troisième et de la quatrième image pour obtenir une première image de différence (D1) ;
- on détermine la valeur moyenne (M) des pixels de cette image de différence;
- on soustrait pixel par pixel l'image par rapport à la troisième tension ($V_3$) de l'image par rapport à la quatrième tension ($V_4$) pour obtenir une deuxième image de différence (D2) ;
- on divise les valeurs de la deuxième image de différence par la valeur moyenne déterminée.

8. Procédé selon l'une des revendications précédentes, dans lequel on illumine la cellule solaire avec de la lumière ayant une intensité de lumière constante.

9. Procédé selon l'une des deux revendications précédentes, dans lequel on établit une courbe caractéristique de tension pour ainsi déterminer le point de puissance maximale d'une cellule solaire à évaluer.

10. Procédé selon l'une des revendications précédentes, dans lequel on effectue la mesure de la luminescence par moyen d'un système à caméra à condition que (1) la cellule solaire se trouve sous une excitation lumineuse externe artificielle ou naturelle, que (2) lors d'une première mesure la tension appliquée à la cellule solaire soit modulée par une valeur inférieure ou égale à zéro à la valeur d'une tension positive quelconque ($V_b$) et une image soit générée par calcul d'une différence ou par la technique lock-in, que (3) lors d'une deuxième mesure la tension soit variée de manière symétrique avec une différence de 20 % ou moins par la tension ($V_b$) et une image soit générée par calcul d'une différence ou par la technique lock-in,

11. Procédé selon l'une des revendications précédentes, dans lequel on utilise une technique lock-in pour effectuer un procédé thermographique au lieu d'un procédé de luminescence.

12. Procédé selon la revendication précédente, dans lequel le composant se trouve sous l'illumination constante et homogène, artificielle ou naturelle et on utilise un procédé thermographique sous les conditions de la revendication 2.

13. Procédé selon la revendication précédente, dans lequel on utilise un procédé thermographique sous les conditions des revendications 9 et 10.

**FIG. 1**

(a)

(b)

**FIG. 2**

**FIG. 3**

**FIG. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013085385 A

**In der Beschreibung aufgeführte Nicht-Patentliteratur**

- **U. RAU.** *IEEE J. Photovoltaics,* 2012, vol. 2, 169-172

- **J. WONG, M. A.** *Green, Phys. Rev.,* 2012, vol. 85, 235205